# FASCICULE DE BREVET EUROPEEN

(11) **EP 3 932 833 B1**
(45) Date de publication et mention de la délivrance du brevet: **17.04.2024**
(21) Numéro de dépôt: 21182565.8
(22) Date de dépôt: 29.06.2021
(51) Int. Cl.: B65G 15/08, B65G 39/12, B65G 21/00, F16P 1/00

(54) **STATION DE SUPPORT, CONVOYEUR À BANDE ET PROCÉDÉ DE FABRICATION D'UNE TELLE STATION DE SUPPORT**
STÜTZSTRUKTUR, BANDFÖRDERER UND HERSTELLUNGSVERFAHREN EINER SOLCHEN STÜTZSTRUKTUR
SUPPORT STATION, CONVEYOR BELT AND METHOD FOR MANUFACTURING SUCH A SUPPORT STATION

(30) Priorité: 30.06.2020 FR 2006847
(43) Date de publication de la demande: 05.01.2022
(73) Titulaire: Brunone, René, 27950 Saint Marcel (FR)
(72) Inventeur: BRUNONE, René, 27950 SAINT-MARCEL (FR)
(74) Mandataire: Lavoix

(56) Documents cités:
- AU-A1- 2005 203 738
- FR-A1- 2 750 966
- FR-A1- 2 782 988
- FR-A1- 2 798 916
- FR-A1- 2 900 139
- FR-A1- 2 946 034

## Description

La présente invention concerne en général la sécurité des convoyeurs à bande.

Un convoyeur à bande peut comprendre une pluralité de stations de support réparties le long du trajet de la bande. Chaque station de support comporte un châssis et un ou plusieurs rouleaux montés rotatifs sur le châssis et supportant la bande de transport.

Des angles rentrants sont formés entre chaque rouleau de support et la bande transporteuse quand la bande transporteuse repose sur les rouleaux. Ces angles rentrants sont extrêmement dangereux, du fait que et la bande et le rouleau sont en mouvement. La main d'un opérateur peut être happée dans l'angle rentrant et écrasée entre la bande et le rouleau.

Il est possible de placer des protections au droit de chaque rouleau, de manière à empêcher l'accès à l'angle rentrant.

Toutefois, de telles protections ne sont pas entièrement satisfaisantes, et un faible risque d'accident subsiste.

FR2900139A1 divulgue une station de support d'un convoyeur à bande selon le préambule de la revendication 1. La protection d'angle rentrant est relativement rigide et difficile à agencer sur certaines stations de support.

Dans ce contexte, l'invention vise à proposer une station de support d'un convoyeur à bande, présentant une protection renforcée au niveau des angles rentrants, mais ne présentant pas les défauts ci-dessus..

A cette fin, l'invention porte selon un premier aspect sur une station de support d'un convoyeur à bande selon la revendication 1.

Ainsi, les interstices entre les rouleaux ne sont pas laissés sans protection. Une protection au contraire est placée longitudinalement en vis-à-vis dudit interstice, de telle sorte que les opérateurs ne peuvent plus accédés aux angles rentrants à travers les interstices.

Cette protection accrue permet de diminuer le risque d'accident.

La station de support peut en outre présenter une ou plusieurs des caractéristiques des revendications dépendantes 2 à 5.

Selon un second aspect, l'invention porte sur un convoyeur à bande selon la revendication 6 comportant une bande transporteuse et une pluralité de stations de support de ladite bande ayant les caractéristiques ci-dessus, réparties le long de ladite bande.

Selon un troisième aspect, l'invention porte sur un procédé de fabrication selon la revendication 7 d'une station de support ayant les caractéristiques ci-dessus, comprenant les étapes suivantes :
- obtention d'un profilé présentant un bord supérieur continu et une partie inférieure continue sur toute sa longueur ;
- découpe du vide et des fentes, par poinçonnage en T du profilé.

D'autres caractéristiques et avantages de l'invention ressortiront de la description détaillée qui en est donnée ci-dessous, à titre indicatif et nullement limitatif, en référence aux figures annexées, parmi lesquelles :
La figure 1 est vue en perspective d'une station de support selon l'invention, seul un tronçon de la bande transporteuse reposant sur la station de support étant représentée ;
La figure 2 est une vue de face de la station de support de la figure 1 ;
La figure 3 est une vue de face de la protection d'angle rentrant équipant la station de support des figures 1 et 2, à l'état déplié et ;
La figure 4 est une vue de côté de la protection d'angles rentrants de la figure 3.

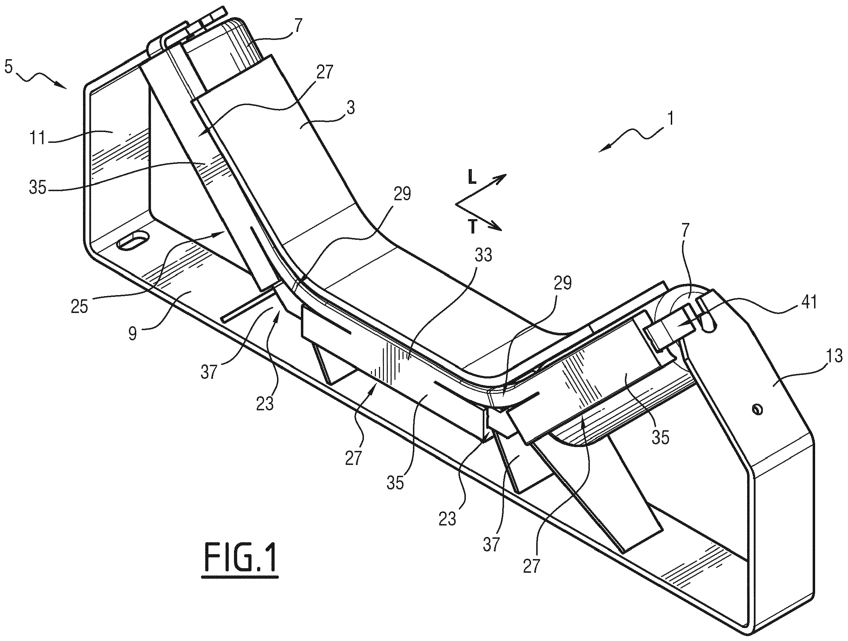

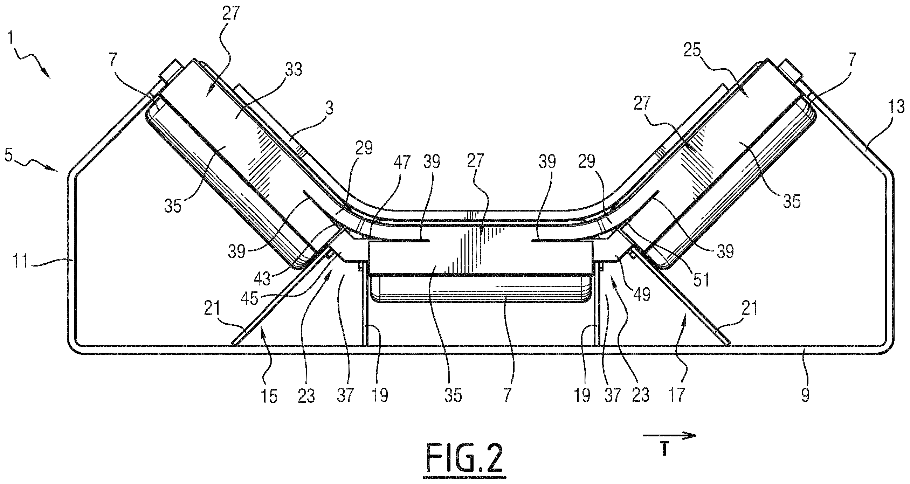

La station de support 1 représentée sur les figures 1 et 2 est destinée à être intégrée dans un convoyeur à bande.

Ce convoyeur est typiquement destiné au transport de matériaux divisés, par exemple du sable ou des minerais issus d'une carrière.

Ce convoyeur à bande comporte typiquement une bande transporteuse longitudinale 3 et une pluralité desdites stations de support 1, destinées à supporter la bande transporteuse 3. Ces stations de support 1 sont réparties le long de la bande.

Typiquement, la bande transporteuse 3 est repliée en boucle et engagée à ces extrémités autour de rouleaux de retournement (non représentés).

Généralement, l'un des deux rouleaux de retournement est moteur pour assurer l'entrainement de la bande.

Sur les figures 1 et 2, seul un court tronçon longitudinal de la bande 3 est représenté, pour laisser apparaître la structure de la station de support.

La station de support 1 comprend un châssis 5, et au moins deux rouleaux de support 7 prévus pour supporter la bande de transport 3.

La bande de transport 3 repose sur les rouleaux de support 7, et circule longitudinalement d'un côté amont des rouleaux 7 vers un côté aval des rouleaux 7.

La direction longitudinale L de circulation de la bande de transport 3 est matérialisée par une flèche sur la figure 1.

Les rouleaux 7 sont montés sur le châssis 5 autour d'axes de rotation respectifs, qui ne sont pas visibles sur les figures. Ces axes de rotation sont sensiblement perpendiculaires à la direction longitudinale.

Dans l'exemple représenté sur les figures, la station de support 1 comporte 3 rouleaux de support 7, un rouleau central et deux rouleaux latéraux placés de part et d'autres du rouleau central suivant une direction transversale T matérialisée sur la figure 2.

La direction transversale est ici horizontale et sensiblement perpendiculaire à la direction longitudinale.

L'axe de rotation du rouleau central 7 est sensiblement transversal.

Les axes de rotation des rouleaux latéraux 7 sont inclinés, les inclinaisons étant telles que les trois rouleaux de support 7 présentent la forme d'une auge.

Dans l'exemple représenté, le châssis 3 comporte une base 9 prévue pour reposer sur un support, et deux montants latéraux 11 et 13. Il comporte également deux fers pliés en « V » 15 et 17, fixés à la base 9 . Le rouleau central 7 est monté rotatif entre les deux fers 15 et 17. Les rouleaux latéraux 7 sont montés l'un entre le montant latéral 11 et le fer 15, et l'autre entre le montant latéral 13 et le fer 17.

Plus précisément, chaque fer 15, 17 comporte une branche latérale 19 et une branche centrale 21 formant un « V » pointant vers le haut. Chaque rouleau latéral 7 est monté entre la branche latérale 21 d'un des fers 15, 17 et l'un des montants latéraux 11, 13. Le rouleau central est monté entre les branches centrales 19 des deux fers en « V » 15, 17.

En variante, le châssis 3 présente toute autre forme adaptée.

En variante, la station de support 1 ne comporte que deux rouleaux 7 ou comporte plus de trois rouleaux 7.

Les axes de rotation de ces rouleaux peuvent former des angles non nuls les uns par rapport aux autres, ou au contraire les axes de rotation peuvent être alignés transversalement.

En tout état de cause, les rouleaux 7 sont séparés transversalement les uns des autres par des interstices 23.

Cet interstice 23 est délimité par les surfaces circulaires d'extrémité des rouleaux 7.

Dans l'exemple représenté, il présente une forme générale en « V », car les axes de rotation des rouleaux sont inclinés les uns par rapport aux autres.

Dans l'exemple représenté sur les figures 1 et 2, l'interstice 23 correspond sensiblement à l'espace délimité entre la branche centrale 19 et la branche latéral 21 de chaque fer en « V ».

Des angles rentrants sont formés entre les rouleaux de support 7 et la bande transporteuse 3 quand la bande transporteuse 3 repose sur les rouleaux de support 7. Chaque angle rentrant est délimité d'un côté par la face inférieure de la bande de transport 3, et d'un autre côté par le rouleau 7.

La station de support 1 comporte encore une protection d'angles rentrants 25.

La protection d'angles rentrants 25 est placée du côté amont des rouleaux 7.

La protection d'angles rentrants 25 comprend pour chaque rouleau une protection de rouleau 27 placée longitudinalement en vis-à-vis dudit rouleau 7 d'un côté amont du rouleau 7.

Selon l'invention, la protection d'angles rentrants 25 comporte en outre, pour le ou chaque interstice 23, une protection d'interstice 29 placée longitudinalement en vis-à-vis dudit interstice 23, d'un côté amont dudit interstice 23.

Chaque protection de rouleau 27 s'étend, parallèlement à l'axe de rotation dudit rouleau 7, sur toute la longueur dudit rouleau 7. La protection de rouleau 27 présente ainsi sensiblement la même longueur axiale que le rouleau 7.

Elle est placée immédiatement sous la bande transporteuse 3, de manière à masquer l'angle rentrant.

De la même façon, chaque protection d'interstice 29 s'étend sur toute la largeur de l'interstice 23, c'est-à-dire d'un des rouleaux 7 encadrant l'interstice 23 à l'autre rouleau 7. Plus précisément, elle s'étend de la protection de rouleau 27 protégeant le rouleau 7 situé d'un côté de l'interstice à la protection de rouleau 27 du rouleau situé de l'autre côté de l'interstice 23. La protection d'interstice 29 est placée immédiatement sous la bande transporteuse 3, de manière à empêcher l'accès aux angles rentrants à travers l'interstice 23 correspondant.

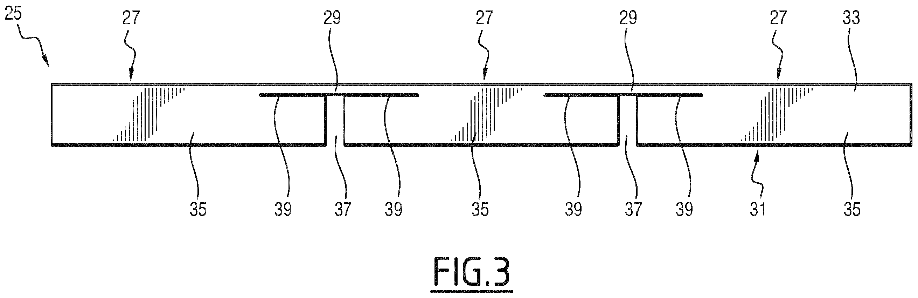

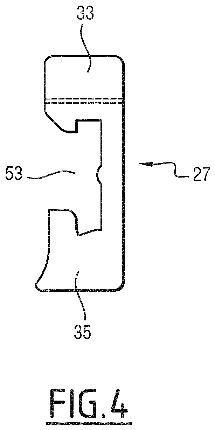

Selon l'invention, les protections de rouleau 27 et la ou les protections d'interstices 29 sont venues de matière les unes avec les autres dans une pièce unique 31. En d'autres termes, elles sont constituées d'une unique pièce continue, Cette pièce est représentée sur les figures 3 et 4

Avantageusement, les protections de rouleau 27 et la ou les protections d'interstices 29 sont dans un matériau choisi dans la liste suivante : une matière plastique, notamment le polyéthylène, un métal, un bois, un composite etc.

Comme visible sur la figure 3, ladite pièce unique 31, comprend un bord supérieur continu 33, prévu pour être placé immédiatement sous la bande transporteuse 3.

Le bord supérieur continu 33 s'étend transversalement le long de chaque rouleau 7 et du ou de chaque interstice 23.

En d'autres termes, le bord supérieur continu 33 s'étend sur toute la longueur axiale de chaque rouleau 7, et sur toute la largeur de chaque interstice 23.

Le bord supérieur continu 33 suit sensiblement la forme de la surface inférieure de la bande 3 au niveau des rouleaux 7, comme expliqué plus loin.

En d'autres termes, les rouleaux 7 définissent ensemble une surface de support de la bande 3, qui est en auge dans l'exemple représenté. Le bord supérieur continu 33 présente sensiblement la même forme. Le sommet du bord supérieur continu 33 arrive légèrement sous la surface inférieure de la bande 3. Un écartement limité, de quelques millimètres, typiquement entre 1 et 10mm, avantageusement entre 2 et 5mm, garantit l'absence de frottement entre la bande transporteuse 3 et le bord supérieur continu 33 de la protection d'angles rentrants 25.

La pièce unique 31 comprend, pour chaque protection de rouleau 27, une partie inférieure 35 solidaire du bord supérieur continu 33, et prolongeant le bord supérieur continu 33 vers le bas.

L'écartement entre la bande 3 et la protection d'angle rentrant 25, et l'écartement entre la protection d'angle rentrant 25 et le rouleau. 7 sont choisies suffisamment faibles pour empêcher une personne de passer un doigt entre la bande et la protection ou entre la protection et le rouleau. Ces écartements sont de quelques millimètres.

Dans l'exemple représenté, le bord supérieur continu 33 présente une hauteur, prise perpendiculairement à l'axe de rotation des rouleaux comprise entre 10% et 30% du diamètre du rouleau.

Dans l'exemple représenté, la partie inférieure 35 présente une hauteur comprise entre 20% et 100% du diamètre du rouleau.

Pour d'autres applications, la hauteur du bord supérieur et la hauteur de la partie inférieure peuvent ne pas être comprises dans les fourchettes ci-dessus.

Le tronçon du bord supérieur continu 33 appartenant à la protection 27 d'un rouleau 7 s'étend sensiblement parallèlement à l'axe de rotation de ce rouleau.

La ou chaque protection d'interstice 29 ne comprend que le bord supérieur continu 33.

Ainsi, les parties inférieures 35 de deux protections de rouleau 27 voisines sont séparées par un vide 37.

Comme visible sur les figures 2 et 3, les protections de rouleau 27 encadrant le vide 37 comprennent chacune une fente 39 séparant le bord supérieur 33 de la partie inférieure 35.

Ces deux fentes 39 débouchent chacune à une extrémité dans le vide 37. Chaque fente 39, à son extrémité opposée au vide 37, est fermée.

Dans l'exemple représenté, les fentes 39 sont sensiblement parallèles aux axes des rouleaux 7

En variante les fentes forment un angle par rapport aux axes des rouleaux 7.

Chaque fente 39 s'étend sur une longueur, prise parallèlement à l'axe de rotation du rouleau 7, comprise entre 10% et 30% de la longueur de la protection de rouleau 27.

Par ailleurs, le châssis 5, pour permettre la fixation de la protection d'angles rentrants 25, comporte au moins une barre de fixation 41.

Cette barre de fixation 41 est typiquement un fer plat.

Dans l'exemple représenté, la barre de fixation 41 s'étend de manière continue depuis le montant 11 jusqu'au montant 13.

Plus précisément, il comprend une partie rectiligne 43 s'étendant du montant 11 jusqu'à la branche latérale 21 du fer en « V » 15, prolongée par une partie en « V » 45 s'étendant entre la branche latérale 21 et la branche centrale 19 du fer en « V » 15, prolongée par une deuxième partie rectiligne 47 s'étendant entre les branches centrales 19 des deux fers en « V » 15, 17, prolongée par une autre partie en « V » 49 s'étendant entre la branche centrale 19 et la branche latérale 21 du fer en « V » 17, encore prolongée par une troisième partie rectiligne 51 s'étendant entre la branche latérale 21 du fer en « V » 17 et le montant latéral 13.

En variante, la barre 41 ne comporte que les parties rectilignes 43, 47 et 51, et ne comporte pas les parties en « V » 45 et 49.

Comme le montre la figure 4, au moins une des parties inférieures 35 comprend une rainure 53 fixée par coopération de forme sur la barre de fixation 41.

De préférence, chacune des parties inférieures 35 comporte ladite rainure 53.

La fixation de la protection d'angles rentrants 25 sur le châssis 5 est ainsi très simple. Il suffit de clipper les parties inférieures 35 sur la barre de fixation 41.

La protection d'angles rentrants est particulièrement avantageuse quand les rouleaux présentent des axes de rotation inclinés les uns par rapport aux autres.

Les axes de rotations peuvent former entre eux un angle s'inscrivant dans un plan vertical, comme représenté sur les figures 1 et 2, et/ou former entre eux un angle s'inscrivant dans un plan horizontal.

Dans le second cas, les rouleaux extérieurs forment un angle avec le rouleau central dans le plan horizontal, appelé typiquement angle de pincement. En d'autres termes, les axes des rouleaux extérieurs ne sont plus perpendiculaires à la direction longitudinale.

En effet, les protections de rouleau 27 sont alors inclinées les unes par rapport aux autres.

Dans ce cas, la ou chaque protection d'interstice 29 forme une charnière entre les deux protections de rouleaux 27 qui l'encadrent, comme illustré sur les figures 1 et 2.

Ceci est obtenu de manière particulièrement simple, d'abord du fait de l'existence d'un vide 37 entre les parties inférieures 35 des protections de rouleau 27 voisines. Les parties inférieures 35 des protections de rouleau 27 voisines sont entièrement libres l'une par rapport à l'autre. Par ailleurs, les fentes 39, comme visibles nettement sur la figure 2, permettent au bord supérieur continu 33 d'adopter au niveau des interstices une forme arquée.

Le choix de la matière utilisée pour réaliser la protection d'interstice 29 contribue également à l'obtention de ce résultat. La matière est suffisamment souple pour se déformer sans dégradation de la pièce. Typiquement, la matière présente un module d'élasticité compris entre 50 et 400 MPa, de préférence compris entre 150 et 250 MPa, et valant par exemple 190 MPa.

Le rayon de courbure peut être réglé facilement, notamment en ajustant la longueur et la largeur des fentes 39, ainsi que la section du bord supérieur continu 33.

Le rayon de courbure est ajusté de manière à correspondre au rayon de courbure de la bande à vide au niveau de l'interstice.

En d'autres termes, la courbure de la ou chaque protection d'interstice 29 est la plus proche possible de la forme de la bande lorsqu'elle n'est pas chargée. La bande à vide est alors plus éloignée des extrémités des rouleaux (interstice plus grand) que lorsqu'elle est chargée (interstice plus petit).

Le rayon de courbure de la ou chaque protection d'interstice 29 est choisi pour respecter deux contraintes :
- lorsque la bande est chargée, elle ne doit pas être en contact avec la protection d'interstice ;
- lorsque la bande est à vide, l'écartement entre la protection d'interstice et la bande ne doit pas permettre à un opérateur de pouvoir glisser ses doigts entre la bande et la protection d'interstice (environ 5mm maximum).

Typiquement, chaque fente 39 présente une largeur comprise entre un trois millimètres. Le vide 37 présente une largeur comprise entre 10 et 30 millimètre. La largeur du vide 37 est prise entre les extrémités débouchantes des deux fentes 39.

La protection d'angles rentrants 25 est avantageusement formée à partir d'un profilé.

Ainsi, le bord supérieur continu 33 présente la même section sur toute sa longueur.

De même, la partie inférieure 35 de chaque protection de rouleau 27 présente la même section sur toute sa longueur, cette section étant prise perpendiculairement à l'axe du rouleau 7 correspondant.

Du fait de la conception de la protection d'angles rentrants 25, le procédé de fabrication de la station de support est particulièrement simple.

Le procédé comprend notamment les étapes suivantes :
- obtention d'un profilé présentant un bord supérieur continu et une partie inférieure continue sur toute sa longueur ;
- découpe du vide 37 et des fentes 39 dans le profilé, par poinçonnage en « T » du profilé.

Le procédé comprend bien entendu une étape d'obtention du châssis 5 et des rouleaux 7, et une étape d'assemblage des rouleaux 7 sur le châssis 5.

Après les deux étapes ci-dessus, permettant la fabrication de la protection d'angles rentrants 25, le procédé comprend une étape de fixation de la protection d'angles rentrants 25 sur le châssis 5. Vous pouvez préciser que le « clippage » et le cintrage de la protection s'effectue à la main.

Le profilé présente une section constante sur toute sa longueur, avant poinçonnage. Il est obtenu par toute méthode adaptée, par exemple par extrusion.

Le bord supérieur continu du profilé forme directement le bord supérieur continu 33 de la protection d'angles rentrants 25, sans que d'autres opérations de fabrication soient nécessaires.

Après poinçonnage, la partie inférieure continue du profilé constitue les différentes parties inférieures 35 des protections de rouleau 27.

On conçoit donc que le procédé de fabrication de la station de support est particulièrement simple.

## Revendications

1. Station de support d'un convoyeur à bande, la station de support (1) comprenant :
- un châssis (5);
- au moins deux rouleaux (7) de support prévus pour supporter une bande de transport (3) circulant longitudinalement d'un côté amont des rouleaux de support (7) vers un côté aval des rouleaux de support (7), les au moins deux rouleaux de support (7) étant montés rotatifs sur le châssis (5) autour d'axes de rotation respectifs sensiblement perpendiculaires à la direction longitudinale et étant séparés transversalement par au moins un interstice (23), des angles rentrants étant formés entre les au moins deux rouleaux de support (7) et la bande de transport (3) quand la bande de transport (3) repose sur les au moins deux rouleaux de support (7);
- une protection d'angle rentrant (25), comprenant pour chaque rouleau de support (7) une protection de rouleau (27) placée longitudinalement en vis-à-vis dudit rouleau de support (7) d'un côté amont dudit rouleau de support (7), et pour le ou chaque interstice (23) une protection d'interstice (29) placée longitudinalement en vis-à-vis dudit interstice (23) d'un côté amont dudit interstice (23) ; dans laquelle les protections de rouleau (27) et la ou chaque protection d'interstice (29) sont venues de matière les unes avec les autres dans une pièce unique (31) ; dans laquelle ladite pièce unique (31) comprend un bord supérieur continu (33), prévu pour être placé immédiatement sous la bande transporteuse (3) et s'étendant transversalement le long de chaque rouleau de support (7) et du ou de chaque interstice (23) ; **caractérisée en ce que** ladite pièce unique (31) comprend, pour chaque protection de rouleau (27), une partie inférieure (35) solidaire du bord supérieur continu (33) et prolongeant le bord supérieur continu (33) vers le bas, la ou chaque protection d'interstice (29) comprenant seulement le bord supérieur continu (33).

2. Station de support selon la revendication 1, dans laquelle les protections de rouleau (27) et la ou chaque protection d'interstice (29) sont dans un matériau présentant un module élastique compris entre 50 et 400 MPa.

3. Station de support selon la revendication 1 ou 2, dans laquelle les parties inférieures (35) de deux protections de rouleaux (27) voisines sont séparées par un vide (37), lesdites deux protections de rouleaux (27) comprenant chacune une fente (39) séparant le bord supérieur continu (33) de la partie inférieure (35) et débouchant dans le vide (37).

4. Station de support selon l'une quelconque des revendications 1 à 3, dans laquelle le châssis (5) comporte au moins une barre de fixation (41), au moins une des parties inférieures (35) comprenant une rainure (53) fixée par coopération de forme sur l'au moins une barre de fixation (41).

5. Station de support selon l'une quelconque des revendications 1 à 4, dans laquelle les au moins deux rouleaux de support (7) présentent des axes de rotation inclinés l'un par rapport à l'autre, les protections de rouleau (27) correspondantes étant inclinées l'une par rapport à l'autre, la protection d'interstice (29) formant une charnière entre les protections de rouleaux (27).

6. Convoyeur à bande comportant une bande de transport (3) et une pluralité de stations de support (1) de ladite bande de transport (3) selon l'une quelconque des revendications 1 à 5, réparties le long de ladite bande de transport (3).

7. Procédé de fabrication d'une station de support selon la revendication 3, le procédé comprenant les étapes suivantes :
- obtention d'un profilé présentant un bord supérieur continu et une partie inférieure continue sur toute sa longueur ;
- découpe du vide (37) et des fentes (39), par poinçonnage en T du profilé.

## Patentansprüche

1. Stützstruktur eines Bandförderers, wobei die Stützstation (1) umfasst:
- ein Gestell (5),
- mindestens zwei Stützrollen (7), die zum Stützen eines Transportbandes (3) vorgesehen sind, das in Längsrichtung von einer stromaufwärts gelegenen Seite der Stützrollen (7) zu einer stromabwärts gelegenen Seite der Stützrollen (7) läuft, wobei die mindestens zwei Stützrollen (7) drehbar an dem Gestell (5) angebracht sind, um jeweilige Drehachsen im Wesentlichen senkrecht zur Längsrichtung drehbar sind und in Querrichtung durch mindestens einen Spalt (23) getrennt sind, wobei zwischen den mindestens zwei Stützrollen (7) und dem Transportband (3) eingezogene Winkel gebildet werden, wenn das Transportband (3) auf den mindestens zwei Stützrollen (7) ruht;
- eine Abdeckung für einspringende Ecken (25), die für jede Stützrolle (7) eine Rollenabdeckung (27) umfasst, die in Längsrichtung gegenüber der Stützrolle (7) auf einer Seite stromaufwärts von der Stützrolle (7) und für den oder jeden Spalt (23) eine Spaltabdeckung (29), die in Längsrichtung gegenüber dem Spalt (23) auf einer stromaufwärts gelegenen Seite des Spalts (23) angeordnet ist;
wobei die Rollenabdeckungen (27) und die oder jede Spaltabdeckung (29) in einem einzigen Teil (31) miteinander verbunden sind; wobei das einzige Teil (31) eine durchgehende obere Kante (33) aufweist, die dazu bestimmt ist, unmittelbar unter dem Förderband (3) angeordnet zu werden, und sich entlang jeder Stützrolle (7) und des oder jedes Spalts (23) erstreckt; **dadurch gekennzeichnet, dass** das einzelne Teil (31) für jede Rollenabdeckung (27) ein unteres Teil (35) umfasst, das einstückig mit der oberen durchgehende Kante (33) ist und die obere durchgehende Kante (33) nach unten verlängert, wobei die oder jede Spaltabdeckung (29) nur die obere durchgehende Kante (33) umfasst.

2. Stützstruktur nach Anspruch 1, bei der die Rollenabdeckungen (27) und die oder jede Spaltabdeckung (29) aus einem Material mit einem Elastizitätsmodul zwischen 50 und 400 MPa bestehen.

3. Stützstruktur nach Anspruch 1 oder 2, bei der die unteren Teile (35) von zwei benachbarten Rollenabdeckungen (27) durch einen Hohlraum (37) getrennt sind, wobei die beiden Rollenabdeckungen (27) jeweils einen Schlitz (39) aufweisen, der die durchgehende obere Kante (33) von dem unteren Teil (35) trennt und in den Hohlraum (37) mündet.

4. Stützstruktur nach einem der Ansprüche 1 bis 3, wobei das Gestell (5) mindestens eine Befestigungsstange (41) aufweist, wobei mindestens einer der unteren Abschnitte (35) eine Nut (53) aufweist, die formschlüssig an der mindestens einen Befestigungsstange (41) befestigt ist.

5. Stützstruktur nach einem der Ansprüche 1 bis 4, wobei die mindestens zwei Stützrollen (7) zueinander geneigte Drehachsen aufweisen, wobei die entsprechenden Rollenabdeckungen (27) zueinander geneigt sind, wobei die Spaltabdeckung (29) ein Scharnier zwischen den Rollenabdeckungen (27) bildet.

6. Bandförderer mit einem Förderband (3) und einer Vielzahl von Stützstrukturen (1) zum Tragen des Förderbandes (3) nach einem der Ansprüche 1 bis 5, die entlang des Förderbandes (3) verteilt sind.

7. Verfahren zur Herstellung einer Stützstruktur nach Anspruch 3, wobei das Verfahren die folgenden Schritte umfasst:
- Erhalt eines Profils mit einem durchgehenden oberen Rand und einem durchgehenden unteren Teil über seine gesamte Länge;
- Ausschneiden des Hohlraums (37) und der Schlitze (39), durch T-förmiges Stanzen des Profils.

## Claims

1. A support station of a belt conveyor, the support station (1) comprising:
- a frame (5);
- at least two support rollers (7) adapted to support a conveyor belt (3) running longitudinally from an upstream side of the support rollers (7) to a downstream side of the support rollers (7), the at least two support rollers (7) being rotatably mounted on the frame (5) about respective axes of rotation substantially perpendicular to the longitudinal direction and being transversely separated by at least one gap (23), nip angles being formed between the at least two support rollers (7) and the conveyor belt (3) when the conveyor belt (3) rests on the at least two support rollers (7)
- a nip angle protector (25), comprising for each support roller (7) a roller guard (27) placed longitudinally opposite said support roller (7) on an upstream side of said support roller (7), and, for the or each gap (23), a gap protector (29) placed longitudinally opposite said gap (23) on an upstream side of said gap (23);
wherein the roller guards (27) and the or each gap protector (29) are integral with each other in a single part (31);
wherein said single part (31) comprises a continuous upper edge (33), intended to be placed immediately under the conveyor belt (3) and extending transversely along each support roller (7) and the or each nip (23);
**characterized in that** said single part (31) comprises, for each roller guard (27), a lower portion (35) integral with the continuous upper edge (33) and extending the continuous upper edge (33) downwardly, the or each gap guard (29) comprising only the continuous upper edge (33).

2. The support station according to claim 1, wherein the roller guards (27) and the or each gap protector (29) are of a material having an elastic modulus between 50 and 400 MPa.

3. The support station according to claim 1 or 2, wherein the lower portions (35) of two adjacent roller guards (27) are separated by a space (37), said two roller guards (27) each comprising a slot (39) separating the continuous upper edge (33) from the lower portion (35) and opening into the space (37).

4. The support station according to any one of claims 1 to 3, wherein the frame (5) comprises at least one fastening bar (41), at least one of the lower portions (35) comprising a groove (53) form-fittingly attached to the at least one fastening bar (41).

5. The support station according to any one of claims 1 to 4, wherein the at least two support rollers (7) have axes of rotation inclined to each other, the corresponding roller guards (27) being inclined to each other, the gap guard (29) forming a hinge between the roller guards (27).

6. A belt conveyor comprising a conveyor belt (3) and a plurality of support stations (1) of said conveyor belt (3) according to any of claims 1 to 5, distributed along said conveyor belt (3).

7. A method of manufacturing a support station according to claim 3, the method comprising the following steps:
- obtaining a profile with a continuous upper edge and a continuous lower part along its entire length;
- cutting the space (37) and the slots (39), by T-punching the profile.
